# EUROPÄISCHE PATENTSCHRIFT

(11) **EP 1 183 634 B1**
(45) Veröffentlichungstag und Bekanntmachung des Hinweises auf die Patenterteilung: **29.06.2005**
(21) Anmeldenummer: 00936609.7
(22) Anmeldetag: 10.04.2000
(51) Int. Cl.: G06F 17/60

(54) **VERFAHREN ZUR KONTROLLE DER IM BETRIEB EINER ANLAGE ENTSTEHENDEN KOSTEN**
METHOD OF CONTROLLING THE COSTS ARISING DURING OPERATIONS OF AN INSTALLATION
PROCEDE POUR CONTROLER LES COUTS GENERES LORS DU FONCTIONNEMENT D'UNE INSTALLATION

(30) Priorität: 22.04.1999 DE 19918332
(43) Veröffentlichungstag der Anmeldung: 06.03.2002
(73) Patentinhaber: SIEMENS AKTIENGESELLSCHAFT, 80333 München (DE)
(72) Erfinder: KOCHENBURGER, Andreas, D-76863 Herxheim (DE)
(86) Internationale Anmeldenummer: PCT/DE2000/001104
(87) Internationale Veröffentlichungsnummer: WO 2000/065495

(56) Entgegenhaltungen:
- EP-A- 0 731 397
- US-A- 5 291 397

## Beschreibung

Die vorliegende Erfindung betrifft ein Verfahren zur Kontrolle der im Betrieb einer Anlage entstehenden Kosten, insbesondere einer Anlage zum Umwandeln fossiler Brennstoffe in Energie, wobei der Betriebszustand mindestens einer Komponente der Anlage über eine Zustandsmeldung erfaßt wird.

Bei bekannten Anlagen, beispielsweise Energieerzeugungsanlagen, wird ein Prozeßleitsystem (PLS) zur Steuerung und Kontrolle der Umwandlung von fossilem Brennstoff in Energie, insbesondere Strom und/oder Wärme, verwendet. Dieses PLS gibt Auskunft über den aktuellen Zustand einzelner Komponenten der Anlage und den ablaufenden Umwandlungsprozeß. Allerdings ist der Umwandlungsprozeß an sich für den Betreiber der Anlage aus wirtschaftlicher Sicht nur ein Zwischenschritt in Richtung Ausgangsprodukt, beispielsweise elektrische Energie. Nachteilig einem bekannten PLS ist insbesondere, daß lediglich anlagenspezifische Warnungen ausgegeben werden, beispielsweise bei Überschreiten bestimmter Grenzwerte für Temperatur oder Druck. Eine Alarmierung zum Vermeiden unnötiger Kosten ist nicht realisiert. Vielmehr werden bei der Konzeption der Anlage bestimmte Parameter vorgegeben, die im Betrieb eingehalten werden sollen. Eine tatsächliche und unmittelbare Kostenkontrolle bei laufender Anlage ist nicht möglich.

Aufgabe der vorliegenden Erfindung ist es daher, ein Verfahren bereitzustellen, mit dem die Betriebskosten während des Betriebs einer Anlage kontrolliert werden können.

Erfindungsgemäß wird diese Aufgabe durch ein Verfahren gemäß Anspruch 1 gelöst.

Die Zustandsmeldungen der einzelnen Komponenten ermöglichen eine Berechnung der in den Komponenten entstehenden Ist-Werte der Kosten sowie der Gesamtkosten der Anlage. Beim Ermitteln der Ist-Werte der Kosten werden die Einnahmen aus der Lieferung des Ausgangsprodukts, insbesondere der Energie, berücksichtigt. So sind aus wirtschaftlicher Sicht nicht nur die entstehenden Ausgaben, sondern auch die realisierten Einnahmen berücksichtigt. In Einzelfallen kann ein vom Idealfall abweichender Betrieb der Anlage, der höhere Ausgaben verursacht, durch gesteigerte Einnahmen gerechtfertigt sein. Die berechneten Ist-Werte der Kosten werden mit theoretisch ermittelten Soll-Werten verglichen und die Abweichung angezeigt. Hierdurch wird unabhängig von dem tatsächlich ablaufenden Umwandlungsprozeß eine Kontrolle über die entstehenden Kosten erreicht. Gleichzeitig wird durch den Vergleich der Ist-Werte der Kosten mit den Soll-Werten Auskunft über die Wirtschaftlichkeit der Anlage gegeben. Zustandsmeldungen im Sinne der Erfindung konnen hierbei analoge und binäre Meßgrößen und abgeleitete Statussignale von Anlageteilen und Komponenten sein.

Vorteilhafte Ausgestaltungen und Weiterbildungen der Erfindung gehen aus den abhängigen Ansprüchen hervor.

In erster vorteilhafter Ausgestaltung werden beim Ermitteln der Ist-Werte der Kosten die Ausgaben für betriebliche Einsatzstoffe, insbesondere den Brennstoff, berücksichtigt. Diese Ausgaben geben Auskunft über den tatsächlichen, unmittelbar betriebsbedingten finanziellen Einsatz.

Nach einer zweiten vorteilhaften Ausgestaltung werden beim Ermitteln der Ist-Werte der Kosten die Ausgaben für die Anlage, insbesondere für Abschreibung, Eigenbedarf, Personal und/oder Wartung, berücksichtigt. Hierdurch werden neben den Ausgaben für Brennstoff auch die Abnutzung der Anlage und der Komponenten, der Personalaufwand und andere laufende Unkosten mit einbezogen. Das Rechenmodell erkennt dann einen schonenden Betrieb der Anlage, der beispielsweise die Abnutzung verringert oder eine Verlängerung der Wartungsintervalle erlaubt. Trotz möglicherweise höherer Brennstoffausgaben können insgesamt geringere Betriebskosten erreicht werden.

Vorteilhaft wird bei Überschreiten einer vorgebbaren Abweichung der Ist-Werte der Kosten von den Soll-Werten eine Warnung ausgegeben. Diese Warnung sensibilisiert das Betriebspersonal und macht es auf einen unwirtschaftlichen Betrieb der Anlage aufmerksam. Das Kostenbewußtsein des Betriebspersonals wird daher wesentlich verbessert.

Gemäß einer vorteilhaften Weiterbildung wird bei Überschreiten einer vorgebbaren Abweichung der Ist-Werte der Kosten von den Soll-Werten eine manuelle Eingabe eines Benutzers angefordert. Die manuelle Eingabe dient als Bestätigung dafür, daß der unwirtschaftliche Betrieb tatsächlich beabsichtigt ist, beispielsweise zu Testzwecken der Anlage. Weiter verbessert diese Eingabe nochmals das Kostenbewußtsein des Betriebspersonals.

In vorteilhafter Ausgestaltung bei Überschreiten einer vorgebbaren Abweichung der Ist-Wert der Kosten von den Soll-Werten eine Aufforderung zum Prüfen der Komponente mit der Abweichung ausgegeben. Das erfindungsgemäße Verfahren weist nicht nur auf gesteigerte Kosten hin, sondern liefert Lösungsvorschläge zur Kostensenkung. Die entsprechenden technischen Informationen können in das Rechenmodell eingegeben und bei der Simulation des Umwandlungsprozesses berücksichtigt werden. Fehlfunktionen der Anlage können rasch erkannt und behoben werden.

Die Zustandsmeldungen und/oder Rechenergebnisse des Rechenmodells können einem Vorschlagsystem zum automatischen Ermitteln eines oder mehrerer Vorschläge zum Verbessern der Wirtschaftlichkeit der Anlage zugeführt werden; insbesondere können Vorschläge ermittelt werden, die einen Weiterbetrieb der Anlage trotz Verschlechterung einer oder mehrerer Kostenpositionen im Hinblick auf die Wirtschaftlichkeit der gesamten Anlage nahelegen oder es können Vorschläge ermittelt werden, die einen mittel- oder unmittelbaren Handlungsbedarf, z.B. eine durchzuführende Wartung, anraten.

Diese Ausgestaltung ermöglicht eine Kombination der zu den einzelnen Komponenten erhaltenen Zustandsmeldungen. Da die Komponenten durch den in der Anlage ablaufenden Prozeß miteinander verbunden sind, ist davon auszugehen, daß der Betriebszustand einer stromaufwärts liegenden Komponente den Betriebszustand einer stromabwärts liegenden Komponente beeinflußt. Durch eine Kombination der einzelnen Zustandsmeldungen miteinander werden derartige Wechselwirkungen zwischen den einzelnen Komponenten zuverlässig erkannt und Fehldiagnosen vermieden. Alternativ oder zusätzlich zu den Zustandsmeldungen können auch Rechenergebnisse des Rechenmodells verwendet werden.

Nach einer vorteilhaften Weiterbildung wird das Ermitteln des oder der Vorschläge auf einer Anzeige optisch und/oder akustisch angezeigt und/oder an ein übergeordnetes System übermittelt. Hierdurch wird das Betriebspersonal auf von dem Vorschlagsystem ermittelte Vorschläge aufmerksam gemacht. Die Übermittlung an ein übergeordnetes System ermöglicht eine zentrale Erfassung und Verwaltung voneinander räumlich getrennter Anlagen.

Vorteilhaft wird der Betrieb der Anlage von einem separaten Prozeßleitsystem überwacht. Das Rechenmodell läuft unabhängig von der Anlage und greift nicht selbständig in den Betrieb der Anlage ein. Hierdurch wird ein zuverlässiger Betrieb der Anlage sichergestellt. Weiter kann das erfindungsgemäße Verfahren bei bestehenden Anlagen nachgerüstet werden.

Nach einer vorteilhaften Weiterbildung werden die Zustandsmeldungen an das Prozeßleitsystem und von dort an das Rechenmodell übertragen werden. Die bei bereits bestehenden Anlagen erfaßten Zustandsmeldungen sind im Regelfall für das Rechenmodell ausreichend. Zusätzliche Meßinstrumente sind nicht erforderlich, so daß das Rechenmodell mit minimalem Aufwand nachgerüstet werden kann.

Nachstehend wird die Erfindung anhand eines Ausführungsbeispiels näher beschrieben, das in schematischer Weise in der Zeichnung dargestellt ist. Dabei zeigt:
Figur 1 eine schematische Darstellung einer Anlage und eines Umwandlungsprozesses;
Figur 2 ein Flußdiagramm des erfindungsgemäßen Verfahrens; und
Figur 3 ein Flußdiagramm zum automatischen Erstellen von Vorschlägen.

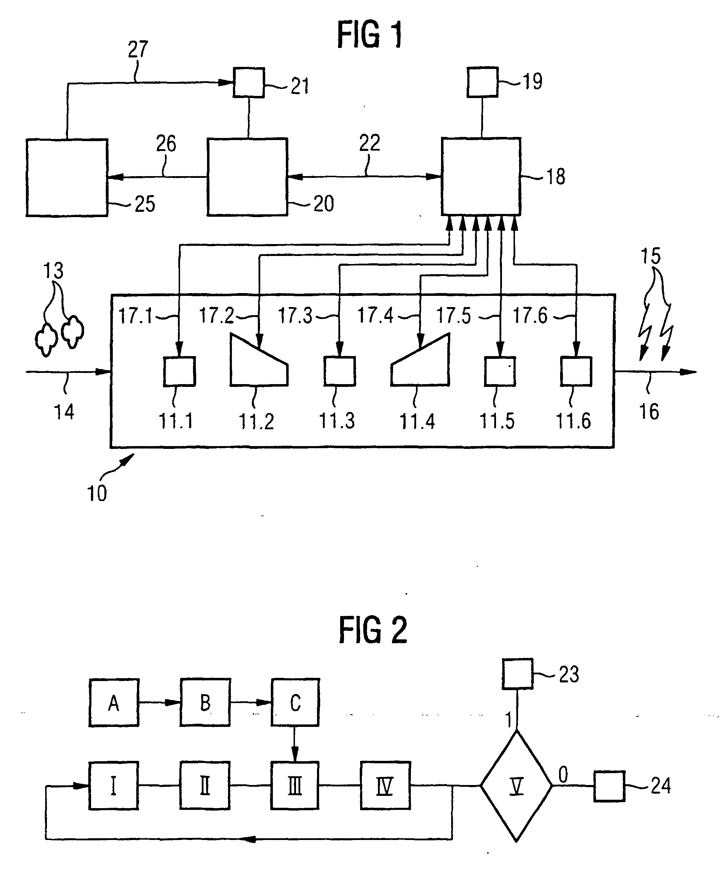

Figur 1 zeigt beispielhaft eine schematische Darstellung einer Anlage 10 zur Umwandlung eines fossilen Brennstoffs 13 in Energie 15. Die Anlage 10 umfaßt eine Reihe unterschiedlicher Komponenten 11.1, 11.2, ..., 11.6. Der Brennstoff 13 wird der Anlage 10 in Pfeilrichtung 14 zugeführt. In der Anlage 10 findet ein Umwandlungsprozeß statt, in dem der Brennstoff 13 mittels der Komponenten 11.1, 11.2, ..., 11.6 in Energie 15 umgewandelt wird. Die Energie 15 wird in Pfeilrichtung 16 an nicht näher dargestellte Verbraucher abgegeben.

Zur Überwachung und Steuerung beziehungsweise Regelung der Anlage 10 und ihrer Komponenten 11.1, 11.2, ..., 11.6 sowie des Umwandlungsprozesses ist ein Prozeßleitsystem (PLS) 18 vorgesehen. Der Betriebszustand der Komponenten 11.1, 11.2, ..., 11.6 wird über Zustandsmeldungen 17.1, 17.2, ..., 17.6 an das PLS 18 gemeldet. Das PLS 18 ist mit einer Ein- und Ausgabeeinheit 19 zum Anzeigen des Betriebszustands sowie zum Eingeben von Befehlen verbunden.

Erfindungsgemäß ist zusätzlich zu dem PLS 18 ein Rechenmodell 20 der Anlage 10 vorgesehen. Das Rechenmodell 20 ist wie das PLS 18 mit einer Ein- und Ausgabeeinheit 21 verbunden. Es umfaßt ein theoretisches Modell der Anlage 10 und ihrer Komponenten 11.1, 11.2, ..., 11.6 und ermittelt die in den Komponenten 11.1, 11.2, ..., 11.6 anfallenden Kosten sowie die Gesamtkosten der Anlage 10. Die erforderlichen Informationen werden von dem PLS 18 an das Rechenmodell 20 geliefert, wie schematisch durch den Pfeil 22 dargestellt. Eigene Meßgeräte sind daher für den Betrieb des Rechenmodells 20 in der Regel nicht erforderlich. Je nach Ausführungsform kann das Rechenmodell 20 auch Informationen an das PLS 18 zurückübermitteln.

Bei der erfindungsgemäßen Ausführungsform gemäß Figur 1 ist weiter ein Vorschlagsystem 25 vorgesehen. Diesem Vorschlagsystem 25 werden die Zustandsmeldungen 17.1, 17.2, ..., 17.6 und/oder Rechenergebnisse des Rechenmodells 20 zugeführt, wie durch den Pfeil 26 angedeutet. Ausgehend von den Zustandsmeldungen 17.1, 17.2, ..., 17.6 und/oder den Rechenergebnissen ermittelt das Vorschlagsystem 25 einen oder mehrere Vorschläge zum Verbessern der Wirtschaftlichkeit der Anlage 10. Diese Vorschläge werden an das Ein- und Ausgabemodul 21 weitergeleitet, wie durch den Pfeil 27 dargestellt.

Zum Erhöhen der Genauigkeit können nicht nur aktuelle Informationen über den derartigen Betriebszustand der Anlage 10 verwendet werden, sondern auch prognostizierte Informationen.

Figur 2 zeigt ein Flußdiagramm des erfindungsgemäßen Verfahrens. In Schritt I wird der Betriebszustand der Komponenten 11.1, 11.2, ..., 11.6 über Zustandsmeldungen 17.1, 17.2, ..., 17.6 erfaßt. Diese Zustandsmeldungen 17.1, 17.2, ..., 17.6 werden in Schritt II an das Rechenmodell 20 übermittelt. Das Rechenmodell 20 ermittelt gemäß Schritt III die in den einzelnen Komponenten 11.1, 11.2, ..., 11.6 anfallenden Ist-Kosten. In Schritt IV werden die ermittelten Ist-Kosten mit vorgegebenen Soll-Werten für die Kosten verglichen. Ist der Unterschied kleiner als eine vorgegebene Abweichung, so wird dies gemäß Verzweigung 1 an eine Anzeige 23 übermittelt. Diese Anzeige 23 kann in das Ein- und Ausgabe-Modul 21 integriert sein oder über das PLS 18 dem Ein- und Ausgabemodul 19 zugeführt werden. Bei größeren Unterschieden wird gemäß Verzweigung 0 eine Warnung ausgegeben, die ein Quittieren 24 erfordert. Zusammen mit der Warnung kann eine Prüfaufforderung ausgegeben werden.

Beim Ermitteln der Kosten in Schritt III können unterschiedliche Einflüsse berücksichtigt werden. Gemäß Schritt A werden die Ausgaben für den Brennstoff 13 berücksichtigt. In Schritt B werden zusätzlich die Ausgaben für die Anlage 10, wie Wartung, Abschreibung, Eigenbedarf, Personal, etc., berücksichtigt. Schritt C ermöglicht das Einbeziehen der durch die Lieferung der Energie 15 erzielten Einnahmen. Somit können alle wirtschaftlichen Faktoren der Einnahmen- und Ausgabenseite in dem Rechenmodell 20 berücksichtigt werden.

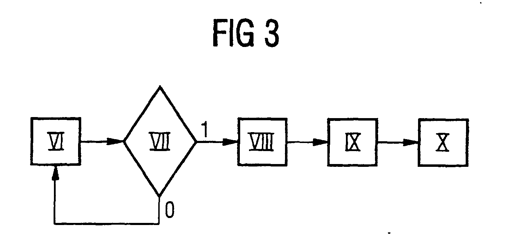

Figur 3 zeigt ein Flußdiagramm zum automatischen Erstellen von Vorschlägen gemäß dem Vorschlagsystem 25. Zunächst werden in Schritt VI die von dem Rechenmodell 20 erhaltenen Zustandsmeldungen 17 sowie gegebenenfalls weitere Werte mit vorab gespeicherten Referenzmustern verglichen. Diese Referenzmuster werden anlagenspezifisch für unterschiedliche Betriebszustände abgelegt. Anschließend führt das Vorschlagsystem 25 in Schritt VII einen Vergleich zwischen den Referenzmustern und den erhaltenen Informationen durch. Falls hierbei keine Übereinstimmung festgestellt wird, wird gemäß Abzweigung Null zu Schritt VI zurückgesprungen. Stellt das Vorschlagsystem 25 eine bestimmte Übereinstimmungsgüte fest, wird gemäß Abzweigung 1 in Schritt VIII das nächstliegende Referenzmuster ausgewählt und der oder die entsprechenden Vorschläge ausgegeben. Die Ausgabe kann entweder auf dem Ein- und Ausgabemodul 21 erfolgen, wie in Figur 1 dargestellt. Alternativ ist selbstverständlich auch eine Ausgabe auf dem Ein- und Ausgabemodul 19 des PLS 18 möglich. Das Ermitteln sowie die Ausgabe des oder der Vorschläge werden optisch oder/oder akustisch angezeigt und hier durch die Aufmerksamkeit des Betriebspersonals geweckt. Alternativ oder zusätzlich kann gemäß Schritt IX ein Bericht erstellt und abgespeichert sowie in Schritt X an ein übergeordnetes System wie beispielsweise ein PC-Netzwerk oder Produktions-Management-System zur weiteren Behandlung übertragen werden.

Die vom Vorschlagsystem 25 erstellten Vorschläge können aus einer Menge anlagenspezifischer vorprogrammierter Handlungsanweisungen an das Betriebspersonal ausgewählt werden. Sie können aber auch automatisch erzeugte Informationen enthalten, wie den Informationscode der betroffenen Komponente 11.1, 11.2, ..., 11.6 der Anlage 10, aktuelle und theoretisch erreichbare Betriebsparameter sowie die Zustandsmeldung 17.1, 17.2, ..., 17.6.

Durch eine Kombination der einzelnen Zustandsmeldungen 17.1, 17.2, ..., 17.6 miteinander sowie gegebenenfalls das Hinzuziehen weiterer Rechenergebnisse des Rechenmodells 20 wird ein zuverlässiges Bild der Anlage 10 geschaffen. Dieses Bild berücksichtigt, daß sich die Komponenten 11.1, 11.2, ..., 11.6 der Anlage 10 gegenseitig beeinflussen. Ein unbefriedigender Betriebszustand der Komponente 11.6 muß nicht zwingend auf einen Fehler der Komponente 11.6 zurückzuführen sein, sondern kann durch einen der stromaufwärts gelegenen Komponenten 11.1, 11.2, ..., 11.5 hervorgerufen werden. Derartige Zustände der Anlage 10 werden durch eine Kombination der einzelnen Zustandsmeldungen 17.1, 17.2, ..., 17.6 miteinander zuverlässig vermieden.

Wird beispielsweise eine Verschlechterung der logarithmischen mittleren Temperaturdifferenz (LMTD) des Kühlwassers am Kondensator eines Kraftwerks erkannt, so wird der Vorschlag erstellt, bei nächster Gelegenheit den Hauptkondensator zu reinigen. Das Vorschlagsystem 25 berücksichtigt hierbei gleichzeitig den nächsten geplanten Anlagenstillstand und ermittelt, ob ein sofortiges Abschalten und eine sofortige Reinigung oder ein vom Idealzustand abweichender Betrieb der Anlage 10 wirtschaftlich sinnvoller ist. Der vom Vorschlagsystem 25 gemachte Vorschlag wird auf Grund seines hohen wirtschaftlichen Verbesserungspotentials generiert, da eine schlechte LMTD ein Indiz fur ein schlechtes Vakuum des Hauptkondensators und damit fur einen verschlechterten Gesamtwirkungsgrad der Anlage 10 ist.

Große Abweichungen der errechneten Ist-Kosten von den vorgegebenen Soll-Werten werden auf dem Ein- und Ausgabe-Modul 21 angezeigt und erfordern ein Quittieren durch das Betriebspersonal. Hierdurch werden nicht nur die Kosten im laufenden Betrieb der Anlage 10 kontrolliert, sondern auch das Kostenbewußtsein des Betriebspersonals wesentlich verbessert.

## Patentansprüche

1. Verfahren zur Kontrolle der im Betrieb einer Anlage (10) entstehenden Kosten, insbesondere einer Anlage zum Umwandeln fossiler Brennstoffe (13) in Energie (15), wobei der Betriebszustand mindestens einer Komponente (11) der Anlage (10) über eine Zustandsmeldung (11) erfaßt wird,
**dadurch gekennzeichnet, daß** die Zustandsmeldung (17) einem Rechenmodell (20) der Anlage (10) zugeführt wird, durch das Rechenmodell (20) die in einer oder mehreren Komponenten (11) der Anlage anfallenden Ist-Werte der Kosten unter Berücksichtigung der Einnahmen aus der Lieferung des Ausgangsprodukts, insbesondere der Energie (15), ermittelt und mit vorgebbaren Soll-Werten für die Kosten verglichen werden und die Abweichung zwischen Ist-Werten und Soll-Werten angezeigt wird.

2. Verfahren nach Anspruch 1, **dadurch**
**gekennzeichnet, daß** beim Ermitteln der Ist-Werte der Kosten die Ausgaben für betriebliche Einsatzstoffe, insbesondere den Brennstoff (13) berücksichtigt werden.

3. Verfahren nach Anspruch 1 oder 2, **dadurch**
**gekennzeichnet, daß** beim Ermitteln der Ist-Werte der Kosten die Ausgaben für die Anlage (10), insbesondere für Abschreibung, Eigenbedarf, Personal und/oder Wartung berücksichtigt werden.

4. Verfahren nach einem der Ansprüche 1 bis 3,
**dadurch gekennzeichnet, daß** bei Überschreiten einer vorgebbaren Abweichung der Ist-Werte der Kosten von den Soll-Werten eine Warnung ausgegeben wird.

5. Verfahren nach einem der Ansprüche 1 bis 4,
**dadurch gekennzeichnet, daß** bei Überschreiten einer vorgebbaren Abweichung der Ist-Werte der Kosten von den Soll-Werten eine manuelle Eingabe eines Benutzers angefordert wird.

6. Verfahren nach einem der Ansprüche 1 bis 5,
**dadurch gekennzeichnet, daß** bei Überschreiten einer vorgebbaren Abweichung der Ist-Wert der Kosten von den Soll-Werten eine Aufforderung (24) zum Prüfen der Komponente (11) mit der Abweichung ausgegeben wird.

7. Verfahren nach einem der Ansprüche 1 bis 6,
**dadurch gekennzeichnet, daß** die Zustandsmeldungen (17) und/oder Rechenergebnisse des Rechenmodells (20) einem Vorschlagsystem (25) zum automatischen Ermitteln eines oder mehrerer Vorschläge zum Verbessern der Wirtschaftlichkeit der Anlage (10) zugeführt werden.

8. Verfahren nach Anspruch 7,
**dadurch gekennzeichnet, daß** das Ermitteln des oder der Vorschläge auf einer Anzeige (21) optisch und/oder akustisch angezeigt oder an ein übergeordnetes System übermittelt wird.

9. Verfahren nach einem der Ansprüche 1 bis 8,
**dadurch gekennzeichnet, daß** der Betrieb der Anlage (10) von einem separaten Prozeßleitsystem (18) überwacht wird.

10. Verfahren nach Anspruch 9,
**dadurch gekennzeichnet, daß** die Zustandsmeldungen (17) an das Prozeßleitsystem (18) und von dort an das Rechenmodell (20) übertragen werden.

## Claims

1. Method of keeping a check on the costs arising during the operation of an installation (10), in particular an installation for converting fossil fuels (13) into energy (15), the operating state of least one component (11) of the installation (10) being recorded by means of a status message (11), **characterized in that** the status message (17) is fed to a computer model (20) of the installation (10), the actual cost values arising in one or more components (11) of the installation are determined by the computer model (20), taking into account the earnings from the delivery of the final product, in particular the energy (15), and compared with predeterminable set values for the costs and the deviation between actual values and set values is indicated.

2. Method according to Claim 1, **characterized in that**, when determining the actual cost values, the expenditure on basic operating materials, in particular the fuel (13), is taken into account.

3. Method according to Claim 1 or 2, **characterized in that**, when determining the actual cost values, the expenditure on the installation (10), in particular for depreciation, own consumption, personnel and/or maintenance, is taken into account.

4. Method according to one of Claims 1 to 3, **characterized in that**, if a predeterminable deviation of the actual cost values from the set values is exceeded, a warning is output.

5. Method according to one of Claims 1 to 4, **characterized in that**, if a predeterminable deviation of the actual cost values from the set values is exceeded, a manual input by a user is requested.

6. Method according to one of Claims 1 to 5, **characterized in that**, if a predeterminable deviation of the actual cost values from the set values is exceeded, a request (24) to check the component (11) with the deviation is output.

7. Method according to one of Claims 1 to 6, **characterized in that** the status messages (17) and/or computational results of the computer model (20) are fed to a proposals system (25) for automatically determining one or more proposals for improving the cost-effectiveness of the installation (10).

8. Method according to Claim 7, **characterized in that** the determination of the proposal or proposals is optically and/or acoustically shown on a display (21) or transmitted to a higher-level system.

9. Method according to one of Claims 1 to 8, **characterized in that** the operation of the installation (10) is monitored by a separate process control system (18).

10. Method according to Claim 9, **characterized in that** the status messages (17) are transmitted to the process control system (18) and from there to the computer model (20).

## Revendications

1. Procédé pour contrôler les coûts engendrés par le fonctionnement d'une installation (10), notamment d'une installation de transformation de combustible (13) fossile en énergie (15), l'état de fonctionnement d'au moins un élément (11) de l'installation (10) étant détecté par une indication (11) d'état, **caractérisé en ce que** l'on envoie l'indication (17) d'état à un modèle (20) de calcul de l'installation (10), on détermine par le modèle (20) de calcul les valeurs réelles se produisant dans un ou dans plusieurs éléments (11) de l'installation des coûts, en tenant compte des revenus de la livraison du produit final, notamment de l'énergie (15), et on les compare à des valeurs de consigne devant être prescrites pour les coûts et on indique l'écart entre les valeurs réelles et les valeurs de consigne.

2. Procédé suivant la revendication 1, **caractérisé en ce que**, lors de la détermination des valeurs réelles des coûts, on tient compte des dépenses pour des substances de charges de fonctionnement, notamment pour le combustible (13).

3. Procédé suivant la revendication 1 ou 2, **caractérisé en ce que**, lors de la détermination des valeurs réelles des coûts, on tient compte des dépenses pour l'installation (10), notamment d'amortissement, des besoins propres, du personnel et/ou de l'entretien.

4. Procédé suivant l'une des revendications 1 à 3, **caractérisé en ce qu'**on émet un avertissement si un écart, pouvant être prescrit, des valeurs réelles des coûts par rapport aux valeurs de consigne est dépassé.

5. Procédé suivant l'une des revendications 1 à 4, **caractérisé en ce que** si un écart, pouvant être prescrit, des valeurs réelles des coûts par rapport aux valeurs de consigne est dépassé, on invite un utilisateur à intervenir manuellement.

6. Procédé suivant l'une des revendications 1 à 5, **caractérisé en ce que** si un écart, pouvant être p rescrit, de la valeur réelle des coûts par rapport aux valeurs de consigne est dépassé, on émet une invitation (24) à vérifier l'élément (11) présentant l'écart.

7. Procédé suivant l'une des revendications 1 à 6, **caractérisé en ce que** l'on envoie les indications (17) d'état et/ou les résultats de calcul du modèle (20) de calcul à un système (25) de proposition pour déterminer automatiquement une ou plusieurs propositions d'amélioration de l'économie de l'installation (10).

8. Procédé suivant la revendication 7, **caractérisé en ce que** l'on indique par voie optique et/ou par voie acoustique la détermination de la proposition ou des propositions sur un indicateur (21) ou on la ou les transmet à un système de hiérarchie supérieure.

9. Procédé suivant l'une des revendications 1 à 8, **caractérisé en ce que** l'on contrôle le fonctionnement de l'installation (10) par un système (18) distinct de conduite de procédé.

10. Procédé suivant la revendication 9, **caractérisé en ce que** l'on transmet les indications (17) d'état au système (18) de conduite de procédé et, de là, au modèle (20) de calcul.
